# EUROPEAN PATENT SPECIFICATION

(11) **EP 2 178 701 B1**
(45) Date of publication and mention of the grant of the patent: **07.09.2011**
(21) Application number: 08786310.6
(22) Date of filing: 22.07.2008
(51) Int. Cl.: B32B 27/36, B29C 55/02, B29C 55/12, B29C 61/00, B65D 77/20, C08J 5/18

(54) **HEAT-SHRINKABLE POLYESTER FILM**
WÄRMESCHRUMPFENDE POLYESTERFOLIE
FILM DE POLYESTER THERMORÉTRACTABLE

(30) Priority: 25.07.2007 EP 07113073
(43) Date of publication of application: 28.04.2010
(73) Proprietor: Cryovac, Inc., Duncan SC 29334 (US)
(72) Inventor: FORLONI, Roberto, I-20017 Rho (IT)
(74) Representative: Fraire, Cristina
(86) International application number: PCT/EP2008/059574
(87) International publication number: WO 2009/013284

(56) References cited:
- EP-A- 1 557 372
- WO-A-02/26493
- WO-A-03/016050
- WO-A-2007/093495
- GB-A- 1 140 765
- US-A1- 2005 106 342

## Description

### Technical field

The invention relates to a heat-shrinkable polyester film comprising a base film and a heat-sealable coating applied on at least one surface of the base film. The base film has a shrink in each direction of less than 5% at 100°C and of at least 5% at 150°C. The invention further relates to the use of the heat-shrinkable polyester film as a lidding film in food packaging operations and to the packages obtained therefrom.

### Disclosure of the invention

Polyester films are commonly used as lidding films, in particular for ovenable containers. Packaging systems comprising a rigid heat-stable container having a thin flexible thermoplastic film sealed onto it are commonly used for the packaging of so-called " ready-meals" , that is food products which only require heating to be ready for consumption. Heating can be carried out in a microwave or in a conventional oven. Due to the temperatures involved in the heating step only few materials can be used for the container, such as aluminium, polyester-coated cardboard or poly(ethylene terephthalate) (PET). Crystalline PET (CPET) containers are especially suitable for this application. To improve the heat-sealability of these containers with the lidding films often the container comprises a layer of amorphous PET (APET) as the food contact layer.

Biaxially oriented PET is commonly used as the lidding film due to its high thermal stability at standard food heating/cooking temperatures. Often biaxially oriented polyester films are heat-set, i.e. non-heat-shrinkable. In general heat-set films provide packages wherein the flexible lid remains floppy on the product. This relaxed appearance is generally not well perceived by the majority of consumers and in fact most producers enclose the lidded container in a printed carton sleeve, adding to the final cost of the package. Thus, the use of a heat-shrinkable film would be highly preferable in lidding applications.

To improve the heat-sealability of the PET lidding film to the container a heat-sealable layer of a lower melting material is usually provided on the film. The heat-sealable layer may be coextruded with the PET base layer, that is extruded simultaneously through a single die, as described in EP-A-1,529,797 and W02007/093495. Alternatively, the heat-sealable layer may be solvent- or extrusion-coated over the base layer. Heat-shrinkable polyester films comprising a solvent-based heat-sealable coating are known. For instance, US 2,762,720 discloses a PET film having a shrink of at least 10% at 100°C in at least one direction provided with a heat-sealable coating of a vinylidene chloride copolymer.

EP-A- 1,252,008 discloses heat-shrinkable films biaxially oriented in the range of 5 to 55% comprising a polymer having at least 80% by weight polyethylene terephthalate and a heat-sealable coating applied from a solution on at least one surface of the film and selected from ethylene/vinyl acetate copolymers, polyethylene terephthalate copolymers and their blends. The films of EP-A- 1,252,008 have a shrink in the range of 5% to 55% , preferably 10% to 30%, at 100°C.

Films with a significant shrink at fairly low temperatures, such as 100°C, tend to be unsuitable in lidding applications: the high shrink at temperatures well below the heat-sealing temperature of polyester films (typically from 140°C to 200°C) causes an excessive shrink of the film before sealing to the container is complete requiring a significant excess of film in order to successfully form a seal between the film and the rim of the container. Thus, it would be advantageous to have polyester heat-shrinkable films which have negligible shrink at temperatures below the polyester heat-sealing temperature.

Even more advantageous would be the use of a heat-shrinkable polyester film that does not need a separate heat-treatment to promote shrink, that is a film provided with such heat-shrinking properties that the heat released during the step of heat-sealing the film to the container is sufficient to promote shrink and give a taut package. The amount of shrink of the heat-shrinkable film and its shrink tension at the heat-sealing temperatures should in any case be such that the resulting package is not distorted. The need for controlled shrink properties, i.e. shrink and/or shrink tension, is particularly important in the case of films used in the packaging of products which are heat-treated in the package, for instance pasteurized, to avoid distortion or breakage of the package as a consequence of the heat-treatment.

It has now been found that a solution to the above problems is provided by a biaxially oriented heat-shrinkable polyester film comprising a base film which has a shrink in each direction of less than 5% at 100°C and of at least 5% at 150°C. The polyester film of the invention has no or negligible shrink at temperatures below the polyester heat-sealing temperatures, typically from 140°C to 200°C, and a maximum shrink in each direction over the same temperature range of less than 30%.

A first object of the present invention is therefore a heat-shrinkable polyester film comprising a base film which has a shrink in each direction of less than 5% at 100°C and of at least 5% at 150°C and a heat-sealable coating applied on at least one surface of the base film, wherein the heat-sealable coating has been applied from a solution.

A second object of the present invention is a package comprising a container, a product and a lid formed of the heat-shrinkable polyester film of the first object sealed onto said container.

The term " polyester" is used herein to refer to both homo-and co-polyesters, wherein homo-polyesters are defined as polymers obtained from the condensation of one dicarboxylic acid with one diol and co-polyesters are defined as polymers obtained from the condensation of one or more dicarboxylic acids with one or more diols. Suitable polyester resins are, for instance, polyesters of ethylene glycol and terephthalic acid, i.e. poly(ethylene terephthalate) (PET). Preference is given to polyesters which contain ethylene units and include, based on the dicarboxylate units, at least 90 mol %, more preferably at least 95 mol %, of terephthalate units. The remaining monomer units are selected from other dicarboxylic acids or diols. Suitable other aromatic dicarboxylic acids are preferably isophthalic acid, phthalic acid, 2,5-, 2,6- or 2,7-naphthalenedicarboxylic acid. Of the cycloaliphatic dicarboxylic acids, mention should be made of cyclohexanedicarboxylic acids (in particular cyclohexane-1,4-dicarboxylic acid). Of the aliphatic dicarboxylic acids, the (C₃-C₁₉)alkanedioic acids are particularly suitable, in particular succinic acid, sebacic acid, adipic acid, azelaic acid, suberic acid or pimelic acid.

Suitable diols are, for example aliphatic diols such as ethylene glycol, diethylene glycol, triethylene glycol, propylene glycol, 1,3-butane diol, 1,4-butane diol, 1,5-pentane diol, 2,2-dimethyl-1,3-propane diol, neopentyl glycol and 1,6-hexane diol, and cycloaliphatic diols such as 1,4-cyclohexanedimethanol and 1,4-cyclohexane diol, optionally heteroatom-containing diols having one or more rings.

Co-polyester resins derived from one or more dicarboxylic acid(s) or their lower alkyl (up to 14 carbon atoms) diesters with one or more glycol(s), particularly an aliphatic or cycloaliphatic glycol may also be used as the polyester resins for the base film. Suitable dicarboxylic acids include aromatic dicarboxylic acids such as terephthalic acid, isophthalic acid, phthalic acid, or 2,5-, 2,6- or 2,7-naphthalenedicarboxylic acid, and aliphatic dicarboxylic acids such as succinic acid, sebacic acid, adipic acid, azelaic acid, suberic acid or pimelic acid. Suitable glycol(s) include aliphatic diols such as ethylene glycol, diethylene glycol, triethylene glycol, propylene glycol, 1,3-butane diol, 1,4-butane diol, 1,5-pentane diol, 2,2-dimethyl-1,3-propane diol, neopentyl glycol and 1,6-hexane diol, and cycloaliphatic diols such as 1,4-cyclohexanedimethanol and 1,4-cyclohexane diol. Examples of such copolyesters are (i) copolyesters of azelaic acid and terephthalic acid with an aliphatic glycol, preferably ethylene glycol; (ii) copolyesters of adipic acid and terephthalic acid with an aliphatic glycol, preferably ethylene glycol; and (iii) copolyesters of sebacic acid and terephthalic acid with an aliphatic glycol, preferably butylene glycol; (iv) co-polyesters of ethylene glycol, terephthalic acid and isophthalic acid. Suitable amorphous co-polyesters are those derived from an aliphatic diol and a cycloaliphatic diol with one or more, dicarboxylic acid(s), preferably an aromatic dicarboxylic acid. Typical amorphous co-polyesters include co-polyesters of terephthalic acid with an aliphatic diol and a cycloaliphatic diol, especially ethylene glycol and 1,4-cyclohexanedimethanol. The preferred molar ratios of the cycloaliphatic diol to the aliphatic diol are in the range from 10:90 to 60:40, preferably in the range from 20:80 to 40:60, and more preferably from 30:70 to 35:65.

The phrase "polyester film" is used herein to indicate that polyesters make up at least 70%, 80%, 90% by weight of the base film.

The base film may have any desired number of layers, typically from 1 to 10 layers, from 1 to 8 layers, from 1 to 5 layers, from 1 to 3 layers.

The total thickness of the base film may vary within wide limits. It is preferably from 3 to 100 micron, in particular from 5 to 80 micron, preferably from 10 to 70 micron, even more preferably from 15 to 50 micron. The term "micron" means µm.

In a first embodiment of the heat-shrinkable film of the present invention the base film has only one layer.

The monolayer base film may comprise any suitable homo- and/or co-polyester resin. Preferably, the base film comprises at least 40 wt.%, 45%, 50%, 55%, 60%, 70%, 80% of poly(ethylene terephthalate).

Preferably, the poly(ethylene terephthalate) has an IV greater than 0.75, e.g. 0.76, 0.77, 0.78, 0.79, even more preferably it has an IV of at least 0.80. An example of such a polymer is PET 9921W® sold by Voridian a poly(ethylene terephthalate) polymer with a melting point Tₘ of 245°C and an IV of 0.80.

The intrinsic viscosity (IV) is defined as the limiting value of the reduced viscosity at infinite dilution of the polymer and is determined using a capillary viscosimeter. Suitable methods for the determination of the intrinsic viscosity are for instance ASTM method D4603-03 and Voridian' s internal method VGAS-A-AN-G-V-1.

Mixtures or blends of any homo- and/or co-polyester can be used for the monolayer base film provided poly(ethylene terephthalate) represents at least 40%, 45%, 50%, 55%, 60%, 70%, 80% by weight of the base film. Preferably the base film comprises at least 40%, 45%, 50%, 55%, 60%, 70%, 80% by weight of poly(ethylene terephthalate) having an IV greater than 0.75, even more preferably of at least 0.80.

Any homo- and/or co-polyester can be blended with poly(ethylene terephthalate). For instance the base film may comprise at least 40%, 45%, 50%, 55%, 60%, 70%, 80% by weight of poly(ethylene terephthalate) and not more than 60%, 55%, 50%, 45%, 40%, 30%, 20% by weight of an amorphous polyester resin. Suitable amorphous polyester resins are co-polyesters of terephthalic acid with an aliphatic diol and a cycloaliphatic diol, especially ethylene glycol and 1,4-cyclohexanedimethanol, like PETG Eastar® 6763 sold by Eastman, which comprises a copolyester of terephthalic acid, about 33 mole % 1,4-cyclohexane dimethanol and about 67 mole % ethylene glycol and which has a glass transition temperature Tg of 81°C.

Suitable base films comprise at least 40%, 45%, 50%, 55%, 60%, 70%, 80% by weight of the poly(ethylene terephthalate) having an IV greater than 0.75 and not more than 60%, 55%, 50%, 45%, 40%, 30%, 20% by weight of an amorphous polyester of terephthalic acid with ethylene glycol and 1,4-cyclohexanedimethanol. For instance, the base film may comprise from 45% to 100%, 50% to 80% by weight of poly(ethylene terephthalate) having an IV greater than 0.75 and 0% to 55, 20% to 50% by weight of the amorphous polyester of terephthalic acid with ethylene glycol and 1,4-cyclohexanedimethanol.

In a second embodiment of the heat-shrinkable film of the present invention the base film has more than one layer. The multilayer base film may have 2, 3, 4, 5, 6 or even a greater number of layers. The base film preferably has 2 to 5 layers, even more preferably 2 to 3 layers. Preferably the layers of the base film are coextruded, that is extruded simultaneously from a single die. Poly(ethylene terephthalate) may be present in one, in more than one or in all of the layers of the base film. The layers of the base film may have the same or different compositions provided at least 40%, 45%, 50%, 55%, 60%, 70%, 80% of the overall weight of the base film is made of poly(ethylene terephthalate). Preferably, the poly(ethylene terephthalate) has an IV greater than 0.75. Even more preferably the poly(ethylene terephthalate) has an IV of at least 0.80.

The film may comprise a first layer comprising poly(ethylene terephthalate) and an additional layer. The additional layer may comprise any suitable thermoplastic resin, although a polyester resin is preferred. The polyester resin may be the same as the resin of the first layer or different. The thickness of the additional layer is generally between about 5 and 40% of the thickness of the first layer. The additional layer may have a thickness of up to about 25 micron, preferably up to about 15 micron, more preferably between about 0.5 and 10 micron, and more preferably between about 0.5 and 7 micron.

A suitable two layer film comprises a first layer comprising a blend of poly(ethylene terephthalate) and an amorphous polyester and an additional layer comprising the same amorphous polyester resin as the base layer. For instance, the first layer may comprise a blend of 45% to 100%, 50% to 80% by weight of poly(ethylene terephthalate) and 0% to 55%, 20% to 50% by weight of an amorphous polyester. The thickness of the layers is such that the amount by weight of poly(ethylene terephthalate) is at least 40%, 45%, 50%, 55%, 60%, 70%, 80% of the overall weight of the film. Preferably, the poly(ethylene terephthalate) has an IV greater than 0.75. Even more preferably the poly(ethylene terephthalate) has an IV of at least 0.80.

A particularly suitable two layer film comprises a first layer comprising 45% to 100%, 50% to 80% by weight of poly(ethylene terephthalate) having an IV greater than 0.75 and 0% to 55%, 20% to 50% by weight of an amorphous polyester of terephthalic acid with ethylene glycol and 1,4-cyclohexanedimethanol and an additional layer comprising the same amorphous polyester as the first layer.

The base film may have a three-layer structure. Various combinations of layers can be used. In a preferred configuration the base film comprises a core layer comprising poly(ethylene terephthalate) and first and second outer layers on both sides of the core layer.

For instance the three-layer film may comprise the core layer, a first and a second outer layer having the same composition and comprising a polyester resin different from the resin used in the core layer. Alternatively, the three-layer film may comprise the core layer comprising poly(ethylene terephthalate), a first outer layer and a second outer layer comprising the same polyester resin as the core layer.

A suitable three-layer film may comprise a core layer comprising at least 40%, 45%, 50%, 55%, 60%, 70%, 80% of poly(ethylene terephthalate) and not more than 60%, 55%, 50%, 45%, 40%, 30%, 20% of an amorphous polyester, a first outer layer comprising an amorphous polyester and a second outer layer comprising the same poly(ethylene terephthalate) as the core layer. Preferably the amorphous polyester in the core layer is the same as the amorphous polyester in the first outer layer. Preferably, the poly(ethylene terephthalate) has an IV greater than 0.75. Even more preferably the poly(ethylene terephthalate) has an IV of at least 0.80.

Alternatively the three-layer film may comprise a core layer comprising a blend of poly(ethylene terephthalate) and of an amorphous polyester and a first and a second outer layers comprising an amorphous polyester. Preferably the amorphous polyester in the core layer is the same as the amorphous polyester in the outer layers. A suitable amorphous polyester is for instance a copolymer of terephthalic acid with ethylene glycol and 1,4-cyclohexanedimethanol.

The thickness of the layers is such that the amount by weight of poly(ethylene terephthalate) is at least 40%, 45%, 50%, 55%, 60%, 70%, 80% of the overall weight of the film. Preferably, the poly(ethylene terephthalate) has an IV greater than 0.75. Even more preferably the poly(ethylene terephthalate) has an IV of at least 0.80.

In general the thickness of each outer layer is between about 5 and 40% of the thickness of the core layer. Each outer layer may have a thickness of up to about 25 micron, preferably up to about 15 micron, more preferably between about 0.5 and 10 micron, and more preferably between about 0.5 and 7 micron. The thickness of the two outer layers may be the same or different.

One or more of the layers of the film of the present invention may contain any of the additives conventionally employed in the manufacture of polymeric films. Thus, agents such as pigments, lubricants, anti-oxidants, radical scavengers, UV absorbers, thermal stabilisers, anti-blocking agents, surface active agents, slip aids, optical brighteners, gloss improvers, viscosity modifiers may be incorporated as appropriate.

In particular, to improve the processing of the film in high speed packaging equipment slip and/or anti-blocking agents may be added to one or both of the surface layers. The additives may be added in the form of a concentrate in a polyester carrier resin. The amount of additive is typically in the order of 0.2 to 5% by weight of the total weight of the layer.

The heat-shrinkable film of the present invention further comprises a heat-sealable coating applied on at least one surface of the base film. According to the Glossary of Packaging Terms of the Flexible Packaging Association a heat-sealable coating is an " adhesive coating applied to a packaging material that is capable of being activated by heat, pressure and dwell time to form a bond. The coating may be applied as a hot melt, from a solvent solution or from a water emulsion" . Accordingly the term " heat-sealable coating" refers to a heat-sealable layer which has not been coextruded with the layers making up the base film.

In the present invention the heat-sealable coating is preferably applied only on one surface of the base film. The heat-sealable coating of the film of the present invention is applied from a solution. The heat-sealable coating is typically applied from a solution comprising from 5% to 50%, from 15% to 50%, from 20% to 40% by weight of solid polymer in the appropriate solvent, generally an organic solvent. Among the polymers useful for the heat-sealable coating are for instance acrylic polymers, co-polyesters and vinyl polymers, like ethylene/vinyl acetate copolymers and poly(vinyl alcohol). Mixtures of any of the aforementioned polymers may also be employed.

Suitable compositions for the heat-sealable coating of the film of the present invention are for instance those sold by Rhom&Haas under the trade name Adcote or those sold by Bostik Findley under the trade name Estersol.

The coating layer is preferably applied to the base film at a dry coat weight in the range from 0.5 to 6.0 g/m², more preferably 1.0 to 6.0 g/m², and particularly 2.0 to 5.0 g/m². The thickness of the dry coating layer is preferably in the range from 0.3 to 5.0 micron, more preferably 0.5 to 3.0 micron, and particularly 1.0 to 2.0 micron.

The heat-shrinkable film of the present invention has no or negligible shrink at temperatures below 140°C. The shrink (in each direction) is less than 5% at temperatures below 100°C, below 120°C, even below 140°C. The shrink (in each direction) is at least 5% at 150°C. Usually the shrink (in each direction) does not exceed 30% over the common heat-sealing temperatures of polyester films, namely in the range of from 140°C to 200°C. The shrink generally does not exceed 30% (in each direction) at 150°C, at 160°C, and even at 180°C.

The maximum value of the shrink tension of the film of the invention is typically not less than 5 kg/cm², 8 kg/cm² or even 10 kg/cm² in at least one direction.

The maximum value of the shrink tension of the films does not exceed 70 kg/cm², 60 kg/cm², 50 kg/cm², 40 kg/cm² in each direction.

Usually the films of the invention have the following combination of shrink/shrink tension properties in each direction: a shrink of less than 5% at 100°C and of at least 5% at 150°C and a shrink tension not exceeding 70 kg/cm². Preferably the films of the invention have a shrink in each direction of less than 5% at 100°C and of at least 5% but not more than 30% at 150°C and a shrink tension not exceeding 70 kg/cm² in each direction. Even more preferably the films of the invention have a shrink in each direction of less than 5% at 100°C and of at least 5% but not more than 30% at 150°C and a shrink tension not exceeding 50 kg/cm² in each direction.

The film of the present invention preferably comprises at least one surface provided with anti-fogging properties. Typically, the anti-fogging surface is the surface of the heat-sealable coating, that is the surface directly facing the product in the container.

To obtain an anti-fogging surface anti-fogging agents may be added directly into the heat-sealable coating composition. The amount of anti-fogging agent added to the heat-sealable coating is generally from 0.5 to 8%, from 1 to 5%, from 1 to 3% by weight based on the dry coat weight of the coating.

Alternatively, the anti-fogging agent may be in the form of a coating applied on the heat-sealable coating. Conventional techniques can be used for the application of the anti-fogging agent to the film of the invention, like gravure coating, reverse kiss coating, fountain bar coating, spraying. The amount of the anti-fogging agent coating is not particularly limited, but it may be 0.1 to 8 mL/m², 0.5 to 7 mL/m², 0.5 to 5 mL/m².

Suitable anti-fogging agents are non-ionic surfactants like polyhydric alcohol fatty acid esters, higher fatty acid amines, higher fatty acid amides, polyoxyethylene ethers of higher fatty alcohols, and ethylene oxide adducts of higher fatty acid amines or amides. Among these, preferred are polyhydric alcohol fatty acid esters, polyoxyethylene ethers of higher fatty alcohols and glycerin fatty acid esters.

The base film of the heat-shrinkable polyester film of the present invention can be manufactured using any conventional biaxial orientation process.

Biaxial orientation may be carried out by any process known in the art such as tubular or flat orientation process. In a tubular process, also known as "double bubble" process, simultaneous biaxial orientation is obtained by extruding a thermoplastic resin tube which is subsequently quenched, reheated and then expanded by internal gas pressure to induce transverse orientation, and wound at a rate which will induce longitudinal orientation. An example of an equipment suitable for this technique is disclosed by US 4,841,605. Application of the heat-sealable coating in the case of a tubular orientation process is conveniently carried out at the end of the orientation process.

In a flat orientation process, the film-forming thermoplastic resins are extruded through a T-die and rapidly quenched upon a chill roll to ensure that the resins are quenched to the amorphous state. Orientation is then effected by stretching, simultaneously or sequentially, the quenched extrudate at a temperature above the glass transition temperature of the thermoplastic resin.

In the sequential flat orientation method a flat, quenched extrudate is firstly oriented in one direction, usually the longitudinal direction, i.e. the forward direction through the film stretching machine, and then in the transverse direction. Longitudinal stretching of the extrudate is conveniently carried out over a set of rotating rolls (MDO), which rotate at different speeds. At least one of the first pairs of rolls is heated, for example by inner circulation of hot oil. Transverse stretching is usually carried out in a tenter apparatus (TDO), which comprises a certain number of heating zones and suitable stretching means. In the subsequent annealing step the biaxially oriented film may be dimensionally stabilised by heat-treatment at a temperature below the melting temperature of the film. Application of the heat-sealable coating may conveniently take place either between the longitudinal and transversal stretching phases or after the transversal stretching and/or the annealing phase.

In the simultaneous flat orientation method a flat, quenched extrudate is oriented simultaneously in both directions. Application of the heat-sealable coating can take place either before the stretching phase or after the stretching and/or the annealing phase.

To produce the heat-shrinkable film of the invention the polymers required for the layer(s) of the base film are fed to separate extruders. The melts are extruded through a T-die and quenched over a chill roll. When the base film comprises at least 40%, 45%, 50%, 55%, 60%, 70%, 80% by weight of a poly(ethylene terephthalate) with an intrinsic viscosity greater than 0.75 it is possible to carry out the biaxial orientation process at lower temperatures and at higher orientation ratios than those typically used for polyester resins with an intrinsic viscosity lower than 0.75. Transversal orientation temperatures not exceeding 120°C, typically lower than 110°C can be used. Thus, longitudinal stretching (MDO) of the extrudate can be conveniently carried out at a temperature ranging from 60°C to 120°C, preferably form 70°C to 100°C.

In the transverse stretching (TDO) phase, the orientation temperatures can be in the range from 90° C (preheating zone) to 130° C (stretching zone), preferably from 90°C (preheating zone) to 110°C (stretching zone).

The longitudinal stretching ratio is in the range from 2.0:1 to 5.0:1, preferably from 2.3:1 to 4.8:1. The transverse stretching ratio is generally in the range from 2.4:1 to 6.0:1, preferably from 2.6:1 to 5.5:1.

Annealing is carried out at a temperature of from 150° C to 210°C, preferably from 160°C to 200°C, even more preferably from 160°C to 195°C. The annealing temperature can be used to fine tune the final shrink properties of the film. Subsequently, the film is wound up in a customary manner.

The heat-sealable coating may be applied on the base film at any one of the following stages of the base film production process: (i) between the longitudinal and the transversal stretching phase; (ii) after the transversal stretching and/or the annealing phase. Solvent-based coatings are preferably applied after the transversal stretching and/or the annealing phase whereas water-based coatings are preferably applied before the transversal stretching step.

The heat-sealable coating is applied to the base film by any suitable conventional technique such as dip coating, bead coating, reverse roller coating, gravure coating or slot coating.

Prior to application of the heat-sealable coating onto the base film, the exposed surface may be subjected to a chemical or physical surface-modifying treatment to improve the adhesion between that surface and the subsequently applied coating. A preferred treatment is to subject the exposed surface of the substrate to a high voltage electrical stress accompanied by corona discharge. Alternatively, the substrate may be pretreated with a chemical primer.

The invention further provides a package comprising a container, a product placed in the container and a lid formed from the heat-shrinkable polyester film of the invention sealed onto the container.

Typically the surface of the container in contact with the product, i.e. the surface involved in the formation of the seal with the lidding film, comprises a polyester resin, usually an amorphous polyester resin (APET). For instance the container can be made of cardboard coated with polyester or it can be integrally made of a polyester resin. Examples of suitable containers for the package of the invention are CPET, APET or APET/CPET containers. Such containers can be either foamed or not-foamed, i.e. solid.

The package is produced by techniques well-known to those skilled in the art. Once the food to be packaged has been introduced into the container, the heat-shrinkable film of the invention is sealed to the container by means of temperature and/or pressure using conventional techniques and equipment. The film is placed on the container such that the heat-sealable coating is in contact with the surface of the container. Sealing is carried out by means of a heated frame at temperatures of from 140°C to 200°C, 160°C to 200°C at a pressure of 2 to 10 bar, 4 to 8 bar. Sealing times are typically in the order of 0.3 to 2.0 seconds, 0.5 to 1.0 seconds. The heat generated by the sealing frame, regardless of the short sealing times, promotes the shrinkage of the film in both directions without distortion of the container to give a taut hermetically sealed lid. No film excess is needed to seal the container as the shrink of the film takes place only after the film is tightly held between the sealing frame and the rim of the container.

The package is particularly suitable for use with ready-prepared foods, so-called " ready-meals" , which are intended to be warmed in a microwave oven or in any other type of oven, such as a conventional convection oven, a direct radiation oven and a forced hot air oven.

The present invention will be illustrated by some examples, however the present invention is not limited to these examples. The heat-shrinkable polyester films prepared in the following examples were evaluated by the methods described below.

% SHRINK: i.e. the percent dimensional change in a 10 cm x 10 cm specimen of film when subjected to a selected heat, has been measured by the ASTM Standard Test Method D 2732-83, immersing the specimen for 5 seconds in a heated oil bath.

SHRINK TENSION: i.e. the force per original unit width developed by a film in the longitudinal (LD) or transversal (TD) direction at a specified temperature in its attempt to shrink while under restraint, has been measured by the following internal test method: a 25.4 mm wide strip of film is cut from the sample in the longitudinal or transverse direction. The force measurement is made by a load cell on which a clamping jaw is connected. Opposed to this jaw, a second one on which the specimen is fixed, can be adjusted in position by an external hand knob to pretension the specimen. The two jaws keep the specimen in the center of a channel into which an impeller blows heated air. In the air channels three thermocouples are fixed to measure the temperature. The temperature of the specimen, as measured by the thermocouples, is increased at a rate of about 2°C/second up to about 180°C and the force is measured continuously. The measured force is then divided by the specimen original width to obtain the shrink force and further divided by the thickness of the film sample to give the shrink tension. Typically the shrink tension is expressed in kg/cm².

SEAL STRENGTH: Seal strength values were measured according to ASTM method F 88-00 on 25.4 mm wide samples obtained by sealing polyester films of the invention to both foamed and rigid supports provided with an APET seal layer using a Mondini Evolution tray lidding machine at sealing temperature of 180°C and a pressure of 5 bars.

The polymers used in the examples are reported in Table 1:

**Table 1**

| | |
|---|---|
| PET1 | Poly(ethylene terephthalate), IV = 0.80 |
| PETG1 | Co-polyester of terephthalic acid, 1,4-cyclohexane dimethanol and ethylene glycol, T_{g} = 81°C |
| PETG2 | Co-polyester of terephthalic acid, 1,4-cyclohexane dimethanol and ethylene glycol, T_{g} = 82°C with 6 wt. % SiO₂ and 10 wt. % waxes |

EXAMPLES 1 AND 2

Two and three layer heat-shrinkable base films having the composition shown in Table 2 were produced by the sequential flat orientation process described above. In particular, the temperature of the chill roll was kept at about 21 °C. The unstretched sheet was preheated at about 82°C and then stretched between rolls in the machine direction at 91 °C at a ratio of 3.4:1 Example 1) and 3.2:1 (Example 2). The longitudinally stretched sheet was pre-heated at about 95°C and then stretched in the transverse direction at about 100°C at a ratio of 5.0:1 (Example 1) and 4.5:1 (Example 2). The annealing step was carried out at a temperature of about 200°C-205°C (Example 1) and at 195°C (Example 2).

**Table 2**

| | Layer 1 (thickness in micron) | Layer 2 (thickness in micron) | Layer 3 (thickness in micron) |
|---|---|---|---|
| Example 1 | PETG1 (5) | PET1 (20) | - |
| Example 2 | PETG1 (6) | 50% PET1 + 50 % PETG1 (24) | 98% PET1 + 2% PETG2 (5) |

The shrink properties of the base films of Example 1 and 2 are reported in Table 3.

**Table 3**

| | | Example 1 | Example 2 |
|---|---|---|---|
| Shrink (%) at 120°C | L | 3 | 3 |
| | T | 4 | 3 |
| Shrink (%) at 140°C | L | 6 | 4 |
| | T | 8 | 5 |
| Shrink (%) at 160°C | L | 11 | 6 |
| | T | 14 | 8 |
| Shrink (%) at 180°C | L | 20 | 12 |
| | T | 22 | 13 |
| Shrink tension (kg/cm²) | L | 38 (158°C) | 8.3 (150°C) |
| | T | 68 (160°C) | 13.5 (170°C) |

EXAMPLES 3-6

The three-layer base film of Example 2 was coated on one side with four different heat-sealable coating compositions as reported in Table 4. The coating was applied on the surface of the film indicated as Layer 1 in Table 2. The films were sealed to PET rigid and foamed trays, both provided with an APET sealing layer, using a conventional tray lidding machine (Mondini Evolution; sealing temperature 180°C, pressure 5 bars). During the sealing operations the films shrunk providing tight looking packages without requiring any further heat treatment. Hermeticity of the seals in the packages was determined by introducing the packages in a closed water tank. Vacuum was created in the headspace of the water tank and the value of the pressure (bar) inside the tank when bubbles start to escape the closed packages was recorded. The films of the invention provide packages with good hermeticity and sealing properties, as shown by the data reported in Table 4.

**Table 4**

| Ex. | Heat-sealable coating | Dry coat weight (g/m²) | Hermeticity (bar) Rigid tray | Hermeticity (bar) Foam tray | Seal strength Rigid tray (g/25.4 mm) | Seal strength Foam tray (g/25.4 mm) |
|---|---|---|---|---|---|---|
| 3 | Adcote 17-3 (CoPET) | 4.1 | 0.26 | 0.24 | 1900 | 1400 |
| 4 | Adcote 33R2B (coPET) | 4.0 | 0.31 | 0.32 | 1400 | 930 |
| 5 | Adcote 33AS35A (coPET) | 3.8 | 0.36 | 0.24 | 1800 | 1700 |
| 6 | Adcote 41C (vinyl copolymer) | 4.1 | 0.33 | 0.29 | 1600 | 700 |

## Claims

1. A heat-shrinkable polyester film comprising a base film having a shrink in each direction of less than 5% at 100°C and of at least 5% at 150°C and a heat-sealable coating applied on at least one surface of the base film, wherein the heat-sealable coating has been applied from a solution.

2. The film according to claim 1 wherein the shrink at 150°C is not more than 30% in each direction.

3. The film according to any preceding claim wherein the shrink is not more than 30% in each direction over the temperature range of from 140°C to 200°C.

4. The film according to claim 1 wherein the base film comprises at least 40% by weight of poly(ethylene terephthalate).

5. The film according to claim 3 wherein the base film comprises a first layer comprising 45 to 90% by weight poly(ethylene terephthalate) and 10 to 55% by weight of an amorphous polyester and a second layer comprising an amorphous polyester.

6. The film according to claim 4 or 5 wherein the poly(ethylene terephthalate) has an intrinsic viscosity greater than 0.75.

7. The film according to claim 4 or 5 wherein the poly(ethylene terephthalate) has an intrinsic viscosity of at least 0.80.

8. The film according to claim 5 wherein the amorphous polyester is a copolymer of terephthalic acid with ethylene glycol and 1,4-cyclohexanedimethanol.

9. The film according to any preceding claim wherein the heat-sealable coating is selected from the group of acrylic polymers, co-polyesters, vinyl copolymers like ethylene/vinyl acetate copolymers, poly(vinyl alcohol) and mixtures thereof.

10. A package comprising a container, a product and a lid formed of the heat-shrinkable polyester film of any one of claims 1 to 9 sealed onto said container.

11. The package according to claim 10 wherein the surface of the container sealed with the heat-shrinkable polyester film of any one of claims 1 to 9 comprises a polyester resin.

## Patentansprüche

1. Wärmeschrumpfbare Polyesterfolie, umfassend eine Trägerfolie mit einer Schrumpfung von weniger als 5%, bei 100 °C und mindestens 5% bei 150 °C in allen Richtungen, und einer heißsiegelfähigen Beschichtung auf mindestens einer Oberfläche der Trägerfolie, wobei die heißsiegelfähige Beschichtung aus einer Lösung aufgebracht wurde.

2. Die Folie gemäß Anspruch 1, wobei die Schrumpfung bei 150 °C nicht mehr als 30% in allen Richtungen beträgt.

3. Die Folie gemäß einem der vorhergehenden Ansprüche, wobei die Schrumpfung , in einem Temperaturbereich zwischen 140 °C und 200 °C, nicht mehr als 30% in allen Richtungen beträgt.

4. Die Folie gemäß Anspruch 1, wobei die Trägerfolie mindestens 40 Gew.-% von Poly(ethylenterephthalat) umfasst.

5. Die Folie gemäß Anspruch 3, wobei die Trägerfolie, eine erste Schicht umfassend 45 bis 90 Gew.-% von Poly(ethylenterephthalat) und 10 bis 55 Gew.-% eines amorphen Polyester, und einer zweiten Schicht umfassend einen amorphen Polyester, umfasst.

6. Die Folie gemäß Anspruch 4 oder 5, wobei das Poly(ethylenterephtalat) eine intrinsische Viskosität von mehr als 0,75 hat.

7. Die Folie gemäß Anspruch 4 oder 5, wobei das Poly(ethylenterephthalat) eine intrinsische Viskosität von mindestens 0,80 hat.

8. Die Folie gemäß Anspruch 5, wobei der amorphe Polyester ein Copolymer aus Terephthalsäure mit Ethylenglykol und 1,4-Cyclohexandimethanol ist.

9. Die Folie gemäß einem der vorhergehenden Ansprüche, wobei die heißsiegelfähige Beschichtung aus der Gruppe der Acryl-Polymeren, Co-Polyester-, Vinyl-Copolymere wie Ethylen-/Vinylacetat-Copolymere, Poly(vinylalkohol) und deren Mischungen ausgewählt wird.

10. Verpackung umfassend einen Behälter, ein Produkt und einen aus der wärmeschrumpfbaren Polyesterfolie nach einem der Ansprüche 1 bis 9 gebildeten Deckel, der auf den genannten Behälter gesiegelt ist.

11. Die Verpackung gemäß Anspruch 10, wobei die Oberfläche des mit der wärmeschrumpfbaren Polyesterfolie nach einem der Ansprüche 1 bis 9 gesiegelten Behälters, ein Polyesterharz umfasst.

## Revendications

1. Film polyester thermorétractable comprenant un film de base ayant une rétraction dans chaque direction de moins de 5 % à 100 °C et d'au moins 5 % à 150 °C et un revêtement thermoscellable appliqué sur au moins une surface du film de base, dans lequel le revêtement thermoscellable a été appliqué à partir d'une solution.

2. Film selon la revendication 1, dans lequel la rétraction à 150 °C n'est pas supérieure à 30 % dans chaque direction.

3. Film selon l'une quelconque des revendications précédentes, dans lequel la rétraction n'est pas supérieure à 30 % dans chaque direction sur l'intervalle de température allant de 140 °C à 200 °C.

4. Film selon la revendication 1, dans lequel le film de base comprend au moins 40 % en poids de poly(téréphtalate d'éthylène).

5. Film selon la revendication 3, dans lequel le film de base comprend une première couche comprenant 45 à 90 % en poids de poly(téréphtalate d'éthylène) et 10 à 55 % en poids d'un polyester amorphe et une deuxième couche comprenant un polyester amorphe.

6. Film selon la revendication 4 ou 5, dans lequel le poly(téréphtalate d'éthylène) a une viscosité intrinsèque supérieure à 0,75.

7. Film selon la revendication 4 ou 5, dans lequel le poly(téréphtalate d'éthylène) a une viscosité intrinsèque d'au moins 0,80.

8. Film selon la revendication 5, dans lequel le polyester amorphe est un copolymère d'acide téréphtalique avec de l'éthylène glycol et du 1,4-cyclohexanediméthanol.

9. Film selon l'une quelconque des revendications précédentes, dans lequel le revêtement thermoscellable est choisi dans le groupe de polymères acryliques, co-polyesters, copolymères vinyliques comme des copolymères éthylène/acétate de vinyle, poly(alcool vinylique) et leurs mélanges.

10. Conditionnement comprenant un conteneur, un produit et un couvercle formé du film polyester thermorétractable selon l'une quelconque des revendications 1 à 9 scellé sur ledit conteneur.

11. Conditionnement selon la revendication 10, dans lequel la surface du conteneur scellé avec le film polyester thermorétractable selon l'une quelconque des revendications 1 à 9 comprend une résine de polyester.
